# EUROPÄISCHE PATENTSCHRIFT

(11) **EP 1 974 786 B1**
(45) Veröffentlichungstag und Bekanntmachung des Hinweises auf die Patenterteilung: **31.07.2013**
(21) Anmeldenummer: 08151715.3
(22) Anmeldetag: 21.02.2008
(51) Int. Cl.: B01D 35/153, B01D 35/16

(54) **Flüssigkeitsfilter**
Liquid filter
Filtre liquide

(30) Priorität: 23.02.2007 DE 102007009352
(43) Veröffentlichungstag der Anmeldung: 01.10.2008
(73) Patentinhaber: Mahle International GmbH, 70376 Stuttgart (DE)
(72) Erfinder: Schmid, Mike, 72072 Tübingen (DE); Siefert, Daniel, 71336 Waiblingen (DE); Widmaier, Andreas, 71083 Herrenberg (DE)
(74) Vertreter: BRP Renaud & Partner

(56) Entgegenhaltungen:
- EP-A- 0 839 563
- EP-A- 1 229 985
- EP-A- 1 419 809
- EP-A- 1 674 142

## Beschreibung

Die vorliegende Erfindung betrifft ein Flüssigkeitsfilter, insbesondere ein Ölfilter zum Reinigen von Schmieröl, insbesondere für Verbrennungsmotoren von Kraftfahrzeugen, mit den Merkmalen des Oberbegriffs des Anspruchs 1.

Aus der EP 1 229 985 B1 ist ein Flüssigkeitsfilter bekannt, das ein Gehäuse aufweist, in dem sich ein mit einem Deckel verschließbarer Aufnahmeraum zur Aufnahme eines Ringfilterelements befindet. Ferner sind vorgesehen, ein Einlass für Rohflüssigkeit, ein Auslass für gereinigte Flüssigkeit sowie ein Leerlauf, durch den der Aufnahmeraum beim Entfernen des Deckels entleerbar ist. Dieser Leerlauf findet sich im Einbauzustand des Flüssigkeitsfilters unten am Aufnahmeraum. Des Weiteren ist am Ringfilterelement ein Verschluss angeordnet, der den Leerlauf verschließt, wenn das Ringfilterelement in den Aufnahmeraum eingesetzt und der Aufnahmeraum mit dem Deckel verschlossen ist. Beim bekannten Flüssigkeitsfilter ist besagter Verschluss durch einen axial vom Ringfilterelement abstehenden, exzentrisch angeordneten Zapfen gebildet. Beim bekannten Flüssigkeitsfilter wird der Aufnahmeraum mit dem Deckel von oben verschlossen und der Leerlauf ist am Boden des Aufnahmeraums im Gehäuse ausgebildet. Zum vereinfachten Auffinden und Einführen des Zapfens in den Leerlauf ist beim bekannten Flüssigkeitsfilter am Gehäuse eine konzentrisch angeordnete und schraubenförmig ansteigende Rampe vorgesehen, wobei der Leerlauf zwischen einem unteren Rampenende und einem oberen Rampenende angeordnet ist. Beim Aufschrauben des Deckels findet der Zapfen durch die Drehbewegung des Ringfilterelements und durch das Abgleiten des Zapfens entlang der Rampe selbsttätig den Leerlauf, kann darin eindringen und ihn verschließen. Bei einer besonders vorteilhaften Ausführungsform des bekannten Flüssigkeitsfilters können die Rampe und der Zapfen nach dem Schlüssel-Schloss-Prinzip zusammenwirken, so dass nur ein mit einem an die Rampe adaptierten Zapfen versehenes Ringfilterelement so mit dem bekannten Flüssigkeitsfilter verwendbar ist, dass der Verschluss beim Aufschrauben des Deckels selbsttätig den Leerlauf findet und verschließt.

Aus der DE 200 06 972 U1, der DE 200 08 112 U1 und der WO 00/62893 A1 sind andere Flüssigkeitsfilter bekannt, bei denen der Deckel den Aufnahmeraum im Einbauzustand von unten verschließt, wobei der Deckel den konzentrisch zur Längsmittelachse des Ringfilterelements angeordneten Leerlauf aufweist, der mit einem als separates Bauteil ausgestalteten Verschluss in Form einer Schraube von außen verschlossen ist. Vor dem Entfernen des Deckels kann somit der Aufnahmeraum durch Entfernen des Verschlusses entleert werden.

Aus der EP 1 674 142 A1 ist ein Flüssigkeitsfilter bekannt, das einen Aufnahmeraum zur Aufnahme eines Ringfilterelements und einen Deckel aufweist, der zum Verschließen des Aufnahmeraums an einem Gehäuse befestigbar ist. Das Gehäuse umfasst ferner einen Einlass für Rohflüssigkeit und einen Auslass für gereinigte Flüssigkeit. Der Deckel enthält zentrisch einen Leerlauf, der im Einbauzustand unten am Aufnahmeraum angeordnet ist und durch den der Aufnahmeraum beim Entfernen des Deckels entleerbar ist. Am Ringfilterelement ist zentrisch ein Verschluss angeordnet, der den Leerlauf verschließt, wenn das Ringfilterelement in den Aufnahmeraum eingesetzt und der Aufnahmeraum mit dem Deckel verschlossen ist. Der den Aufnahmeraum verschließende Deckel ist im Einbauzustand unten am Gehäuse angeordnet.

Aus der WO 01/30480 A1 ist eine andere Filtereinrichtung bekannt, bei der im Gehäuse ein Ölrücklauf exzentrisch angeordnet ist, der mit einem als Zapfen ausgestalteten Verschluss verschossen wird, wenn ein Ringfilterelement in einen Aufnahmeraum des Gehäuses eingesetzt und der Aufnahmeraum durch einen Deckel von oben verschlossen wird. Eine untere Endscheibe des Ringfilterelements trägt den Zapfen exzentrisch, so dass beim Herausziehen des Ringfilterelements der Ölrücklauf geöffnet wird und der Aufnahmeraum in den Rücklauf entleert wird.

Die vorliegende Erfindung beschäftigt sich mit dem Problem, für ein Flüssigkeitsfilter der eingangs genannten Art eine verbesserte oder zumindest ein andere Ausführungsform anzugeben, die insbesondere eine andere Einbausituation für das Flüssigkeitsfilter ermöglicht.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Leerlauf in den Deckel zu integrieren, wobei hier von besonderer Bedeutung ist, dass der dem Leerlauf zugeordnete Verschluss weiterhin am Ringfilterelement angeordnet ist, wodurch der Verschluss beim Entfernen des Deckels automatisch den Leerlauf öffnen kann. Ferner wird vorgeschlagen, das Flüssigkeitsfilter so auszugestalten, dass der den Aufnahmeraum verschließende Deckel im Einbauzustand unten am Gehäuse angeordnet ist. Hierdurch befindet sich der Leerlauf automatisch an einer tief liegenden Stelle, was die Entleerung des Aufnahmeraums beim Entfernen des Deckels begünstigt.

Beim erfindungsgemäßen Flüssigkeitsfilter erfolgt eine Entleerung des Aufnahmeraums beim Entfernen des Deckels durch den Leerlauf nach außen, so dass die durch den Leerlauf abfließende Flüssigkeit in einem externen Behälter gesammelt werden kann. Vorteilhaft ist dabei, dass der Aufnahmeraum weitgehend entleert ist, bis der Deckel vom Gehäuse abnehmbar ist. Anschließend kann bei entferntem Deckel das Ringfilterelement ausgetauscht werden. Besonders vorteilhaft ist hierbei, dass beim Wechseln des Ringfilterelements vergleichsweise sauber gearbeitet werden kann, da der Verschluss an der Innenseite vom Leerlauf entfernt wird und nicht von der Außenseite. Des Weiteren wird vermieden, dass der Verschluss bei einem Wechsel des Ringfilterelements vergessen wird.

Bei der Erfindung ist das Ringfilterelement am Gehäuse axial fixiert, und zwar so, dass bei einer axialen Relativbewegung zwischen Deckel und Gehäuse, die zum Öffnen des Aufnahmeraums durchgeführt wird, der Verschluss den Leerlauf öffnet, insbesondere noch bevor der Deckel vom Gehäuse entfernt ist bzw. davon abnehmbar ist. Das bedeutet, dass das Ringfilterelement beim Abnehmen des Deckels am Gehäuse verbleibt und nicht zwangsläufig mit dem Deckel entfernt wird. Dies kann die Handhabung des Ringfilterelements vereinfachen.

Leerlauf und Verschluss sind exzentrisch am Deckel bzw. am Ringfilterelement angeordnet.

Der am Ringfilterelement ausgebildete Verschluss kann durch einen vom Ringfilterelement axial abstehenden Zapfen gebildet sein, wobei dann der Leerlauf eine Leerlauföffnung aufweist, in die der Zapfen zum Verschließen des Leerlaufs axial eindringt. Alternativ kann der am Ringfilterelement ausgebildete Verschluss auch durch eine axial nach außen offene Kappe gebildet sein, wobei dann der Leerlauf einen axial in den Aufnahmeraum vorstehenden Stutzen aufweist, der zum Verschließen des Leerlaufs axial in die Kappe eindringt. Während die Ausführungsform mit Zapfen möglicherweise einfacher abzudichten ist, besteht bei der Ausführungsform mit Kappe eine reduzierte Beschädigungsgefahr für das Ringfilterelement bei unsachgemäßem Wechsel.

Bei einer exzentrischen Anordnung von Leerlauf und Verschluss kann gemäß einer vorteilhaften Ausführungsform eine konzentrisch angeordnete und schraubenförmig ansteigende Rampe vorgesehen sein, wie sie beispielsweise aus der eingangs genannten EP 1 299 895 B1 an sich bekannt ist, die hiermit durch ausdrückliche Bezugnahme zur Offenbarung der vorliegenden Erfindung hinzugefügt wird. Je nach Ausführungsform kann besagte Rampe entweder am Deckel so angeordnet sein, dass der Leerlauf zwischen einem unteren Rampenende und einem oberen Rampenende angeordnet ist, oder am Ringfilterelement so angeordnet sein, dass der Verschluss zwischen einem unteren Rampenende und einem oberen Rampenende angeordnet ist. Die Rampe vereinfacht das Auffinden der zum Verschließen des Leerlaufs erforderlichen Relativlage zwischen Verschluss und Leerlauf.

Ferner kann bei einer anderen Ausführungsform vorgesehen sein, Rampe und Zapfen bzw. Rampe und Stutzen so auszugestalten, dass diese nach dem Schlüssel-Schloss-Prinzip zusammenwirken. In der Folge kann nur ein mit einem an die Rampe adaptierten Zapfen versehenes Ringfilterelement bzw. nur ein mit einer an den Stutzen adaptierten Rampe versehenes Ringfilterelement so mit dem Flüssigkeitsfilter verwendet werden, dass der Verschluss beim Aufschrauben des Deckels selbsttätig den Leerlauf findet und verschließt. Durch diese Ausgestaltung soll zur Sicherung der ordnungsgemäßen Funktion des Flüssigkeitsfilters erreicht werden, dass nur die tatsächlich für das Flüssigkeitsfilter vorgesehenen Ringfilterelemente verwendet werden können, beispielsweise um das versehentliche Einsetzen eines falschen Ringfilterelements zu vermeiden. Das Ausschließlichkeitskriterium "nur" bezieht sich im vorliegenden Zusammenhang darauf, dass bei passenden bzw. adaptierten Ringfilterelementen beim Aufschrauben des Deckels regelmäßig - Ausnahmen sind grundsätzlich möglich - der Verschluss selbsttätig den Leerlauf findet und verschließt, während bei einem nicht adaptierten Ringfilterelement ein ggf. vorhandener Verschluss beim Aufschrauben des Deckels regelmäßig - auch hier sind Ausnahmen möglich - den Leerlauf nicht findet und dementsprechend nicht verschließt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch einen Teil eines Flüssigkeitsfilters,
- Fig. 2: eine perspektivische Ansicht in einen Deckel des Flüssigkeitsfilters,
- Fig. 3 bis 10: jeweils einen vereinfachten Längsschnitt in einem unteren Teilbereich des Flüssigkeitsfilters, bei unterschiedlichen Ausführungsformen,
- Fig. 11: eine stark vereinfachte Draufsicht auf eine Rampe,
- Fig. 12 und 13: stark vereinfachte Längsschnitte im Bereich der Rampe bei verschiedenen Ausführungsformen.

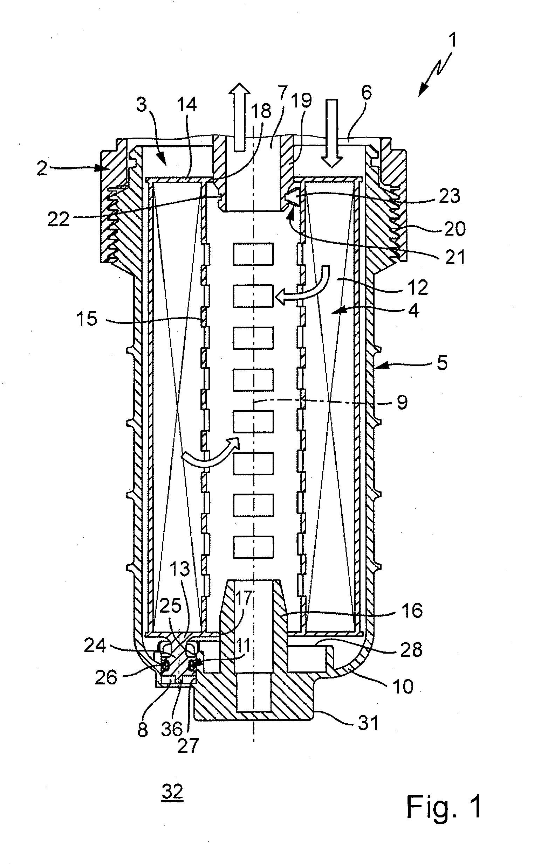

Entsprechend Fig. 1 umfasst ein Flüssigkeitsfilter 1 ein hier nur teilweise dargestelltes Gehäuse 2 sowie zumindest einen Aufnahmeraum 3. Der Aufnahmeraum 3 dient zur Aufnahme eines Ringfilterelements 4 und ist mit einem Deckel 5 verschließbar, der hierzu am Gehäuse 2 befestigbar ist. Das Flüssigkeitsfilter 1 kann vorzugsweise als Ölfilter zum Reinigen von Schmieröl ausgestaltet sein und dabei insbesondere für Verbrennungsmotoren von Kraftfahrzeugen vorgesehen sein. Alternativ ist es grundsätzlich auch möglich, das Flüssigkeitsfilter 1 als Kraftstofffilter auszugestalten. Obwohl bei der hier gezeigten Ausführungsform das Flüssigkeitsfilter 1 an oder in seinem Gehäuse 2 nur einen Aufnahmeraum 3 enthält, sind auch Ausführungsformen möglich mit zwei und mehr Aufnahmeräumen 3. Beispielsweise ist eine Ausführungsform mit drei Aufnahmeräumen 3 möglich, wobei dann vorgesehen sein kann, zwei der Ringfilterelemente 4 parallel oder in Reihe einem Hauptstrom der zu reinigenden Flüssigkeit anzuordnen, während das dritte Ringfilterelement 4 zur Reinigung eines Nebenstroms vorgesehen ist.

Das Flüssigkeitsfilter 1 umfasst außerdem einen Einlass 6 für Rohflüssigkeit bzw. für zu reinigende Flüssigkeit sowie einen Auslass 7 für Reinflüssigkeit bzw. für gereinigte Flüssigkeit. Die im Betrieb auftretende Flüssigkeitsströmung innerhalb des Flüssigkeitsfilters 1 ist hier durch Pfeile angedeutet. Im vorliegenden Fall ist das Ringfilterelement 4 radial von außen nach innen durchströmt, grundsätzlich ist jedoch auch eine andere Bauweise denkbar. Ferner weist das Flüssigkeitsfilter 1 einen Leerlauf 8 auf, durch den der Aufnahmeraum 3 beim Entfernen des Deckels 5 entleerbar ist. In dem in Fig. 1 gezeigten Einbauzustand des Flüssigkeitsfilters 1 ist besagte Leerlauf 8 unten am Aufnahmeraum 3 angeordnet.

Die hier gezeigte Montageposition charakterisiert sich durch eine im wesentlichen vertikale Längsmittelachse 9 des Ringfilterelements 4. Insoweit handelt es sich hier um eine stehende Anordnung des Flüssigkeitsfilters 1, insbesondere um eine auf dem Kopf stehende Anordnung, die auch als hängende Anordnung bezeichnet werden kann. In dieser Einbausituation ist der Deckel 5, wenn er den Aufnahmeraum 3 verschließt, unten am Gehäuse 2 angeordnet. Dementsprechend ist der Leerlauf 4 am bzw. im Deckel 5 ausgebildet. Zweckmäßig ist der Leerlauf 8 in einem den Aufnahmeraum 3 unten begrenzenden Boden 10 des Deckels 5 angeordnet. Bei den hier gezeigten, bevorzugten Ausführungsformen ist der Aufnahmeraum 3 weitgehend innerhalb des Deckels 5 ausgebildet, so dass der Deckel 5 im wesentlichen topfförmig ausgestaltet ist. Grundsätzlich ist jedoch auch eine andere Ausführungsform möglich, bei welcher der Aufnahmeraum 3 zu einem größeren Teil oder vollständig im Inneren des Gehäuses 2 ausgebildet ist.

Das Ringfilterelement 4 weist im Einbauzustand unten einen Verschluss 11 auf. Im gezeigten fertig montierten Zustand ist das Ringfilterelement 4 in den Aufnahmeraum 3 eingesetzt, der Aufnahmeraum 3 ist mit dem Deckel 5 vollständig verschlossen und der Verschluss 11 verschließt den Leerlauf 8.

Das Ringfilterelement 4 besteht beispielsweise aus einem Filtermaterial 12, das koaxial zur Längsmittelachse 9 ringförmig angeordnet ist und aus einem plissierten Bahnenmaterial bestehen kann. Weiter besitzt das Ringfilterelement 4 an seinen axialen Stirnseiten jeweils eine Endscheibe, nämlich eine untere Endscheibe 13 sowie eine obere Endscheibe 14. Das Filtermaterial 12 kann axial mit den Endscheiben 13, 14 fest verbunden, insbesondere verschweißt, sein. Ferner kann das Ringfilterelement 4 radial innen eine Zarge 15 aufweisen, an der sich das Filtermaterial 12 radial innen abstützen kann. Die Innenzarge 15 weist eine Vielzahl von nicht näher bezeichneten Öffnungen auf, durch die gereinigte Flüssigkeit in das reinseitige Innere des Ringfilterelements 4 eintreten und durch den Auslass 7 aus dem Aufnahmeraum 3 austreten kann. Vorzugsweise ist der Verschluss 11 an der unteren Endscheibe 13 angeordnet. Der Verschluss 11 kann integral an der unteren Endscheibe 13 ausgeformt sein. Ebenso ist es möglich, den Verschluss 11 als separates Bauteil herzustellen und an der unteren Endscheibe 13 zu befestigen.

In dem in Fig. 1 gezeigten Beispiel besitzt der Deckel 5 konzentrisch zur Längsmittelachse 9 einen Dorn 16, der im montierten Zustand durch eine zentrale Öffnung 17 der unteren Endscheibe 13 in die Innenzarge 15 axial hineinragt. Zur Abdichtung der Rohseite gegenüber der Reinseite kann die untere Endscheibe 13 radial innen mit einer entsprechenden, hier nicht gezeigten Dichtung versehen sein. Bei einer anderen Ausführungsform kann auch anstelle einer offenen unteren Endscheibe 13 eine geschlossene untere Endscheibe 13 vorgesehen sein.

Ferner besitzt die obere Endscheibe 14 eine zentrale Öffnung 18, in die im montierten Zustand ein am Gehäuse 2 ausgebildeter Auslassstutzen 19 koaxial eindringt. Auch hier erfolgt zweckmäßig eine Abdichtung der Rohseite gegenüber der Reinseite mit Hilfe einer hier nicht gezeigten, an der oberen Endscheibe 14 ausgebildeten Dichtung.

Im Bereich der oberen Endscheibe 14 ist das Ringfilterelement 4 am Gehäuse 2 axial fixiert. Die Haltekraft dieser axialen Fixierung zwischen Ringfilterelement 4 und Gehäuse 2 ist dabei größer ausgelegt als die Haltekraft zwischen dem Ringfilterelement 4 und dem Deckel 5 einer axialen Fixierung zwischen dem Verschluss 11 und dem Leerlauf 8. Hierdurch wird erreicht, dass bei einer axialen Relativbewegung zwischen Deckel 5 und Gehäuse 2, die zum Öffnen des Aufnahmeraums 3 durchgeführt wird, der Verschluss 11 den Leerlauf 8 öffnet. Das bedeutet, dass das Ringfilterelement 4 der Relativbewegung des Deckels 5 nicht folgt, sondern relativ zum Gehäuse 2 in axialer Richtung ortsfest verbleibt. Vorzugsweise ist der Deckel 5 durch eine Verschraubung 20 am Gehäuse 2 befestigt. Alternativ kann grundsätzlich auch eine andere Befestigungsart gewählt werden, wie z.B. ein Bajonettverschluss. Vorzugsweise ist die Verschraubung 20 bzw. die jeweilige andere Befestigungsart so adaptiert, dass der Leerlauf 8 beim Entfernen bzw. beim Aufschrauben des Deckels 5 geöffnet ist, bevor der Deckel 5 vollständig vom Gehäuse 2 abnehmbar ist. Hierdurch wird erreicht, dass der Aufnahmeraum 3 zumindest teilweise durch den Leerlauf 8 entleert ist, bis der Deckel 5 vom Gehäuse 2 abgenommen werden kann.

Die axiale Fixierung des Ringfilterelements 4 am Gehäuse 2 kann beispielsweise mit Hilfe einer Rastverbindung 21 realisiert werden, die es ermöglicht, das Ringfilterelement 4 lösbar am Gehäuse 2 axial zu fixieren, und zwar so, dass es zerstörungsfrei, zumindest ohne Zerstörung des Gehäuses 2, wieder vom Gehäuse 2 entfernbar ist. Die hier gezeigte Rastverbindung 21 umfasst beispielsweise eine am Auslassstutzen 19 radial außen ausgebildete Ringnut 22 sowie mehrere, in Umfangsrichtung verteilt angeordnete, an der Innenzarge 15 ausgebildete, radial nach innen vorstehende Rastkörper 23, die radial von außen in die Ringnut 22 eingreifen. Bei dieser Ausführungsform ist die Rastverbindung 21 so ausgestaltet, dass das Ringfilterelement 4 um seine Längsmittelachse 9 relativ zum Gehäuse 2 drehbar ist, während es gleichzeitig in axialer Richtung am Gehäuse 2 fixiert ist.

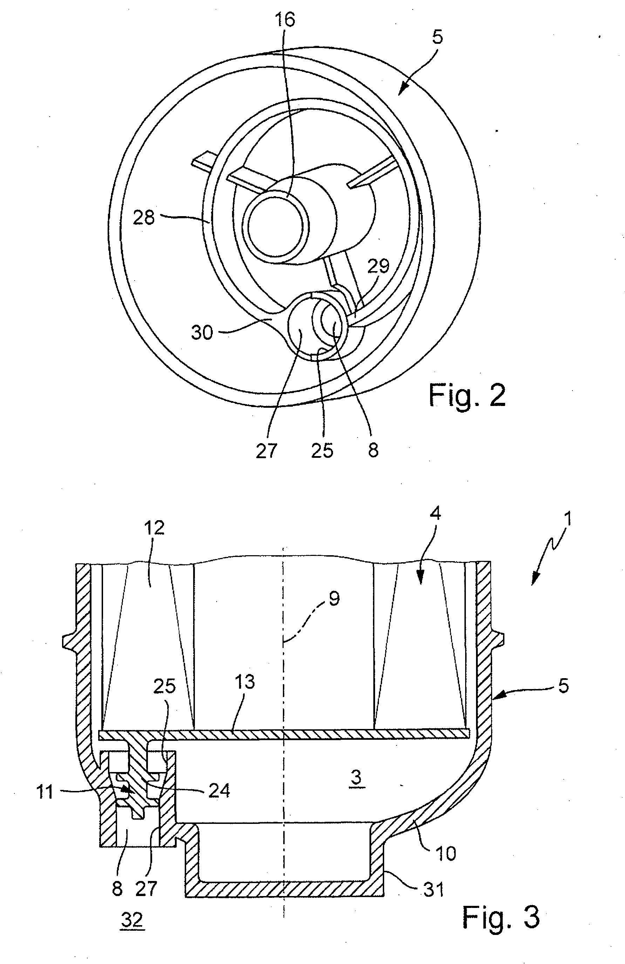

Bei der in den Fig. 1 und 2 gezeigten Ausführungsform ist der Verschluss 11 durch einen Zapfen 24 gebildet, während der Leerlauf 8 eine Leerlauföffnung 25 aufweist. In diese Leerlauföffnung 25 dringt der Zapfen 24 zum Verschließen des Leerlaufs 8 ein. Zweckmäßig kann der Zapfen 24 hierzu eine radial wirkende Dichtung 26, z. B. ein O-Ring, tragen, die mit einer Wandung eines Kanalabschnitts 27 des Leerlaufs 8 zusammenwirkt.

Ferner ist bei der Ausführungsform der Fig. 1 und 2 der Leerlauf 8 bezüglich der Längsmittelachse 9 exzentrisch am Deckel 5 angeordnet. Ebenso ist auch der Verschluss 11 bezüglich der Längsmittelachse 9 exzentrisch am Ringfilterelement 4 angeordnet. Um bei dieser exzentrischen Anordnung von Leerlauf 8 und Verschluss 11 das Auffinden und Verschließen des Leerlaufs 8 mit dem Verschluss 11 vereinfachen zu können, ist bei der Ausführungsform der Fig. 1 und 2 außerdem eine Rampe 28 vorgesehen, die bezüglich der Längsmittelachse 9 konzentrisch angeordnet ist und schraubenförmig ansteigt oder - je nach Bezugssystem - abfällt. In dem Beispiel der Fig. 1 und 2 ist diese Rampe 28 am Deckel 5, und zwar am Boden 10, an einer dem Aufnahmeraum 3 zugewandten Seite, so angeordnet, dass sich der Leerlauf 8 zwischen einem unteren Rampenende 29 und einem oberen Rampenende 30 befindet.

Zumindest die in den Fig. 1 und 2 gezeigte Ausführungsform des Flüssigkeitsfilters 1 funktioniert wie folgt:

Ausgehend von dem in Fig. 1 gezeigten montierten Zustand soll beispielsweise ein verbrauchtes Ringfilterelement 4 gegen ein neues ausgetauscht werden. Hierzu wird der Deckel 5 vom Gehäuse 2 entfernt, zweckmäßig vom Gehäuse 2 abgeschraubt. Dabei kann der Deckel 5 an seinem Boden 10 außen mit einem Außenmehrkant 31 ausgestattet sein, der die Verwendung eines geeigneten Werkzeugs gestattet. Beim Aufschrauben des Deckels 5 dreht sich der Deckel 5 einerseits um die Längsmittelachse 9 und entfernt sich andererseits in axialer Richtung vom Gehäuse 2. Über den in die Leerlauföffnung 25 eingreifenden, exzentrischen Zapfen 24 ist das Ringfilterelement 4 mit dem Gehäuse 5 drehfest gekoppelt, so dass das Ringfilterelement 4 die Drehbewegung des Deckels 5 mitmacht. Dabei ist das Ringfilterelement 4 gegenüber dem Gehäuse 2 um seine Längsmittelachse 9 drehbar, was im Bereich der axialen Fixierung, also hier durch die Rastverbindung 21 realisiert ist. Allerdings verbleibt das Ringfilterelement 4 relativ zum Gehäuse 2 axial ortsfest, so dass sich das Gehäuse 2 beim Aufschrauben auch relativ zum Ringfilterelement 4 axial bewegt. Hierdurch wird der Zapfen 24 allmählich bezüglich des Aufnahmeraums 3 nach innen aus dem Leerlauf 8 herausgezogen. Sobald der Leerlauf 8 geöffnet ist, kann der Aufnahmeraum 3 durch den Leerlauf 8 nach außen, in eine Umgebung 32 des Flüssigkeitsfilters 1 auslaufen. Zweckmäßig wird die auslaufende Flüssigkeit dabei in einem entsprechenden Behälter gesammelt. Bei geöffnetem Leerlauf 8 befindet sich der Deckel 5 noch immer am Gehäuse 2 und muss noch weiter aufgeschraubt werden. Sobald die Verschraubung 20 den Deckel 5 freigibt, kann er nach unten vom Gehäuse 2 abgezogen werden, wobei das Ringfilterelement 4 am Gehäuse 2 verbleibt. Der Aufnahmeraum 3 ist dann offen und das Ringfilterelement 4 ist zum Wechseln zugänglich. Beim Wechseln des Ringfilterelements 4 wird das alte Ringfilterelement 4 vom Gehäuse 2 abgezogen. Für das Anbringen des neuen Ringfilterelementes 4 gibt es nun mehrere Möglichkeiten. Zum einen kann das neue Ringfilterelement 4 einfach in den Deckel 5 eingesetzt werden, wobei es nicht erforderlich ist, dass der Zapfen 24 bereits in die Leerlauföffnung 25 eingreift. Vielmehr wird erwartet, dass der Zapfen 24 an irgendeiner anderen Stelle die Rampe 28 axial kontaktiert oder sogar von dieser beabstandet ist, weil das Ringfilterelement 4 gegen Widerstand auf den Dorn 16 aufgesteckt werden muss. Beim Einschrauben des Deckels 5 in das Gehäuse 2 wird das Ringfilterelement 4 auf den Auslassstutzen 19 aufgesteckt, gleichzeitig dringt der Dorn 16 tiefer in das Ringfilterelement 4 ein. Sobald der Zapfen 24 die Rampe 28 axial kontaktiert, kann der Zapfen 24 entlang der Rampe 28 aufgrund der Drehbewegung des Deckels 5 in Richtung des unteren Rampenendes 29 abgleiten. Sobald der Zapfen 24 das untere Rampenende 29 überfährt, fluchtet er zur Leerlauföffnung 25. Da das obere Rampenende 30 eine weitere Drehverstellung zwischen dem Ringfilterelement 4 und dem Deckel 5 verhindert, führt das weitere Einschrauben des Deckels 5 zu einer Mitnahme des Ringfilterelements 4, so dass dieses sich mit dem Deckel 5 mitdreht und dabei in axialer Richtung relativ zum Deckel 5 und/oder relativ zum Gehäuse 2 bewegt. Spätestens bei fertig angeschraubtem Deckel 5 ist der Zapfen 24 vollständig in den Leerlauf 8 eingerückt und die Rastkörper 23 sind in die Ringnut 22 eingerastet. Grundsätzlich ist es ebenso möglich, beim Einsetzen des Ringfilterelements 4 in den Deckel 5 dieses bereits manuell relativ zum Deckel 5 so weit einzudrehen, dass der Zapfen 24 entlang der Rampe 28 abgleitet und in den Leerlauf 8 eindringt. Anschließend kann der Deckel 5 mit vormontiertem Ringfilterelement 4 am Gehäuse 2 montiert werden. Ebenso ist es möglich, das Ringfilterelement 4 zunächst am Gehäuse 2 zu befestigen, also am Auslassstutzen 19 zu verrasten. Durch das nachfolgende Aufschrauben des Deckels 5 kann auch hier bei entsprechender Anpassung der Steigung der Rampe an die Gewindesteigung der Verschraubung 20 erreicht werden, dass der Deckel 5 das Ringfilterelement 4 erst dann mitdreht, wenn der Zapfen 24 fluchtend zur Einlassöffnung 25 ausgerichtet ist.

Die Fig. 3 bis 10 zeigen ohne Anspruch auf Vollständigkeit und ohne Beschränkung der Allgemeinheit mehrere Ausführungsbeispiele für unterschiedliche Ausführungsformen des Flüssigkeitsfilters 1.

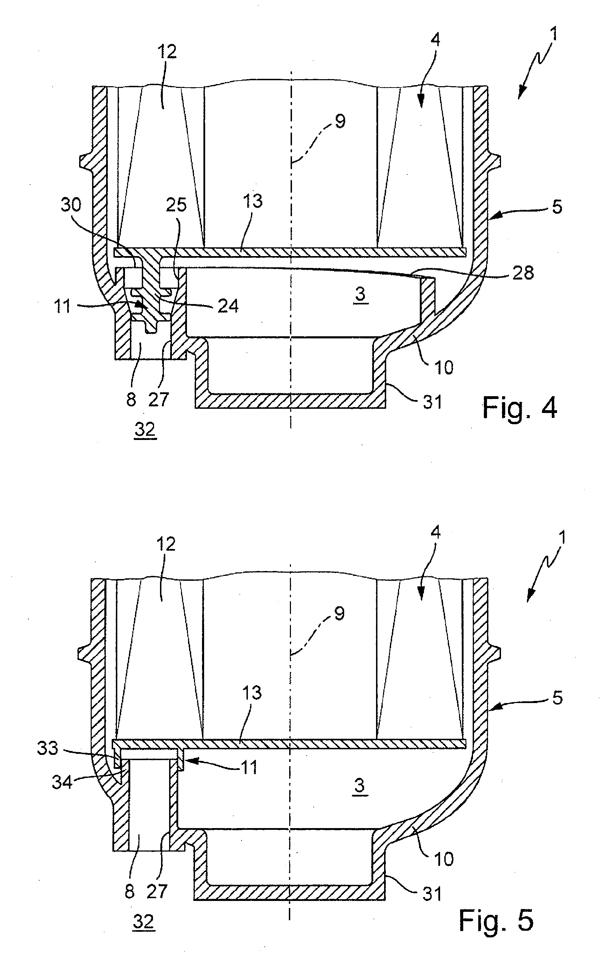

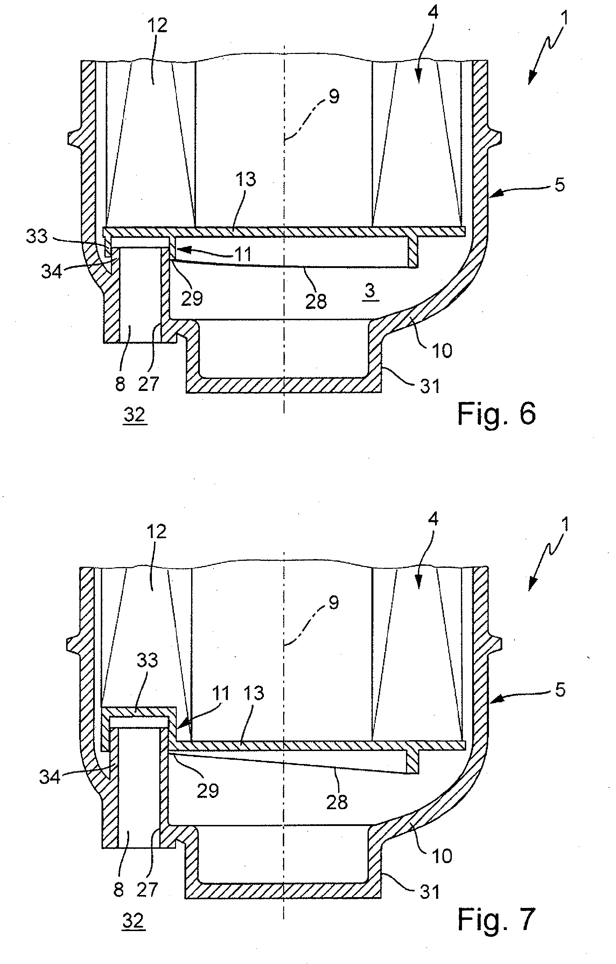

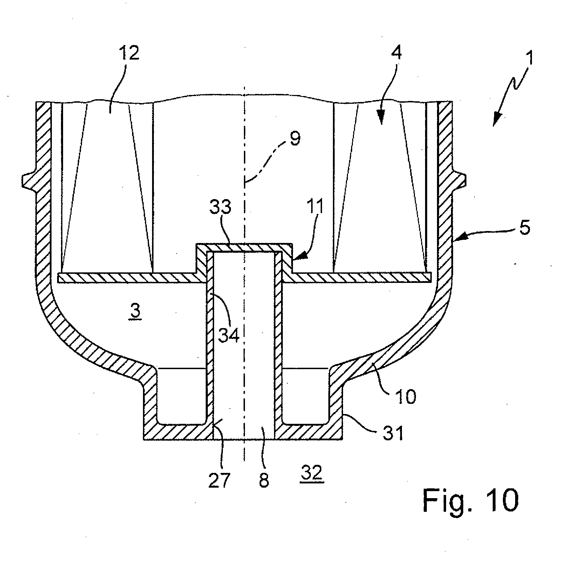

Bei den Ausführungsformen der Fig. 3, 4 und 8 ist der Verschluss 11 wie beim Beispiel der Fig. 1 als Zapfen 24 ausgebildet, der unten axial vom Ringfilterelement 4 absteht. Dementsprechend ist bei diesen Ausführungsformen der Leerlauf 8 mit einer Leerlauföffnung 25 ausgestattet, in die der Zapfen 24 axial eindringt, um den Leerlauf 8 zu verschließen. Im Unterschied dazu ist bei den Ausführungsformen der Fig. 5 bis 7, 9 und 10 der Verschluss 11 jeweils durch eine Kappe 33 gebildet, die axial nach außen, also vom Ringfilterelement 4 weggerichtet offen ist. Bei diesen Ausführungsformen ist der Leerlauf 8 mit einem Stutzen 34 versehen, der axial in den Aufnahmeraum 3 vorsteht und der zum Verschließen des Leerlaufs 8 axial in die Kappe 33 eindringt. Dabei ist die Kappe 33 bei den Ausführungsformen der Fig. 5, 6 und 9 jeweils hülsenförmig ausgestaltet, wobei die Kappe 33 bei diesen Ausführungsformen axial vom Ringfilterelement 4 bzw. von dessen unterer Endscheibe 13 absteht. Bei den Ausführungsformen der Fig. 7 und 10 ist die Kappe 33 jeweils topfförmig ausgestaltet, wobei die Kappe 34 jeweils axial in das jeweilige Ringfilterelement 4 hineinragt. Dabei kann wie bei der Ausführungsform gemäß Fig. 7 vorgesehen sein, dass im Bereich der Kappe 33 das Filtermaterial 12 entsprechend passend zugeschnitten ist. Ebenso ist es grundsätzlich möglich, die untere Endscheibe 13 axial mit einer entsprechen Dicke zu versehen, um darin die Kappe 33 zu integrieren. Bei der in Fig. 10 gezeigten Ausführungsform ist die Kappe 33 bezüglich des Filtermaterials 12 innenliegend angeordnet, wodurch die konstruktive Adaption des Ringfilterelements 4 vergleichsweise klein ist. Ebenso ist eine Ausführungsform möglich, bei der die Kappe 33 einerseits topfförmig axial in das Ringfilterelement 4 hineinragt und andererseits hülsenförmig axial vom Ringfilterelement 4 absteht.

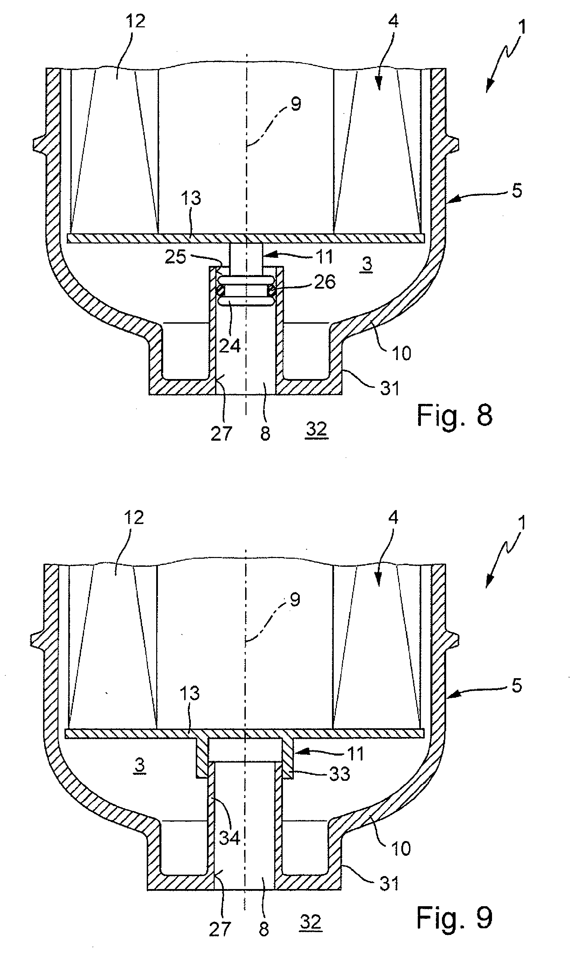

Bei den Ausführungsformen der Fig. 3 bis 7 sind jeweils der Leerlauf 8 und der Verschluss 11 bezüglich der Längsmittelachse 9 exzentrisch am Deckel 5 bzw. am Ringfilterelement 4 angeordnet. Bei den Ausführungsformen der Fig. 8 bis 10 ist der Leerlauf 8 jeweils bezüglich der Längsmittelachse 9 konzentrisch am Deckel 5 angeordnet, während gleichzeitig der zugehörige Verschluss 11 bezüglich der Längsmittelachse 9 konzentrisch am Ringfilterelement 4 angeordnet ist. Die konzentrische Anordnung von Leerlauf 8 und Verschluss 11 kann im Hinblick auf das Auffinden der richtigen Relativlage für den Verschluss 11 relativ zum Leerlauf 8 zum Verschließen des Leerlaufs 8 vorteilhaft sein.

Um auch bei einer exzentrischen Anordnung von Leerlauf 8 und Verschluss 11 das Auffinden der richtigen Relativlage zwischen Verschluss 11 und Leerlauf 8 zum Verschließen des Leerlaufs 8 zu vereinfachen, sind die Ausführungsformen der Fig. 4, 6 und 7 jeweils mit einer Rampe 28 ausgestattet. Besagte Rampe 28 ist bei der in Fig. 4 gezeigten Ausführungsform, wie auch bei Fig. 1, am Deckel 5 so angeordnet, dass der Leerlauf 8 zwischen dem unteren Rampenende 29 und dem oberen Rampenende 30 angeordnet ist. Bei den Ausführungsformen der Fig. 6 und 7 ist dagegen die jeweilige Rampe 28 am Ringfilterelement 4, und zwar vorzugsweise an der unteren Endscheibe 13 angeordnet, wobei die Rampe 28 in axialer Richtung nach außen, also vom Ringfilterelement 4 weg gerichtet, absteht. Die Anordnung der jeweiligen Rampe 28 am Ringfilterelement 4 erfolgt dabei so, dass der jeweilige Verschluss 11 wieder zwischen dem unteren Rampenende 29 und dem oberen Rampenende 30 angeordnet ist.

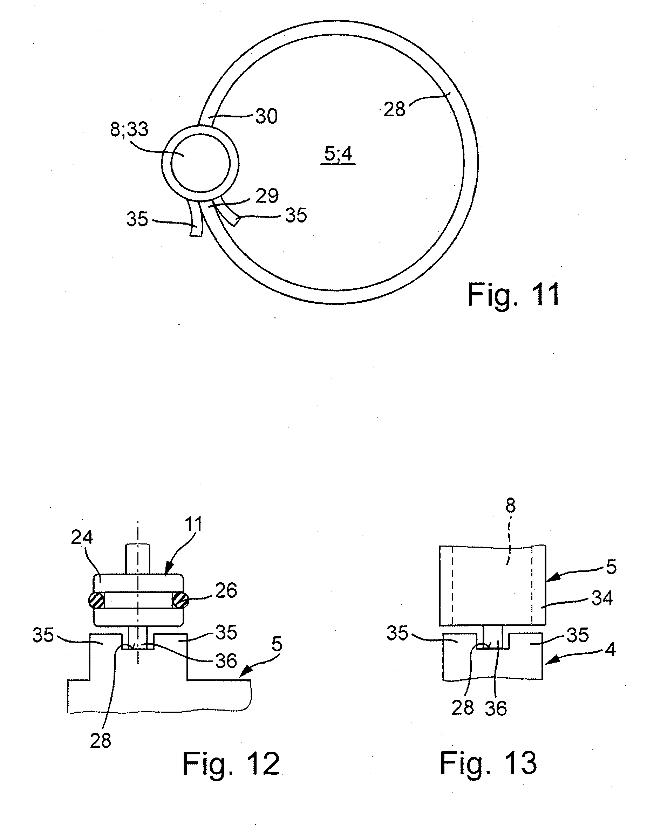

Die mit einer Rampe 28 versehenen Ausführungsformen, insbesondere der Fig. 1, 2, 4, 6 und 7, lassen sich entsprechend den Fig. 11 bis 13 zweckmäßig so ausgestalten, dass die jeweilige Rampe 28 und der Zapfen 24 bzw. die Rampe 28 und der Stutzen 34 nach dem Schlüssel-Schloss-Prinzip zusammenwirken. Dieses Schlüssel-Schloss-Prinzip bewirkt, dass nur solche Ringfilterelemente 4 ordnungsgemäß mit dem Flüssigkeitsfilter 1 verwendbar sind, bei denen der Zapfen 24 an die Rampe 28 des Deckels 5 adaptiert ist bzw. bei denen die am Ringfilterelement 4 ausgebildete Rampe 28 an den Stutzen 34 des Deckels 5 adaptiert ist. Die hierbei relevante ordnungsgemäße Verwendung beinhaltet, dass der jeweilige Verschluss 11 beim Anbringen bzw. beim Drehen des Deckels 5 selbsttätig den Leerlauf 8 findet und verschließt. Bei nicht speziell an das Flüssigkeitsfilter 1 adaptierten Ringfilterelementen 4 verhindert das Schlüssel-Schloss-Prinzip, dass der ggf. vorgesehene Verschluss beim Aufschrauben des Deckels 5 den Leerlauf 8 selbsttätig finden und verschließen kann. Hierdurch soll erreicht werden, dass nur für den Flüssigkeitsfilter 1 genau adaptierte Ringfilterelemente 4 verwendet werden können, beispielsweise um eine ordnungsgemäße Filtrierfunktion gewährleisten zu können.

Zur Realisierung des Schlüssel-Schloss-Prinzips kann entsprechend den Fig. 11 bis 13 beispielsweise am jeweiligen unteren Rampenende 29 eine Einführkontur mit Führungskörpern 35 vorgesehen sein, die einerseits oder beiderseits der Rampe 28 angeordnet sein können und axial über die Rampe 28 vorstehen. Ein entlang der Rampe 28 nach unten abgleitender Zapfen 24 bzw. ein entlang der Rampe 28 nach unten abgleitender Stutzen 34 kann nur dann bis zur Leerlauföffnung 25 bzw. bis zur Kappe 33 gelangen, wenn er einen an die Führungskörper 35 adaptierten, axial vom jeweiligen Verschluss 11 abstehenden Vorsprung 36 aufweist. Bei diesem Vorsprung 36 handelt es sich beispielsweise um einen stiftförmigen oder stegförmigen Ansatz, der den Kontakt zwischen dem Zapfen 24 bzw. dem Stutzen 34 und der Rampe 28 herstellt. Dieser Vorsprung 36 ist axial so dimensioniert, dass er den Zapfen 24 bzw. den Stutzen 34 über die Führungselemente 35 hinwegheben kann. Das heißt, der über den Vorsprung 36 auf der Rampe 28 abgleitende Zapfen 24 oder Stutzen 34 ist axial von den Führungselementen 34 so weit beabstandet, dass er an den Führungskörpern 35 vorbei fluchtend zur Leerlauföffnung 25 bzw. zur Kappe 33 ausrichtbar ist. Entsprechend den Fig. 11 bis 13 kann der Vorsprung 36 zwischen den Führungselementen 35 hindurch die Rampe 28 kontaktieren und dadurch das Abgleiten des Zapfens 24 bzw. des Stutzens 34 ermöglichen.

Im übrigen wird hinsichtlich des Schlüssel-Schloss-Prinzips und seiner Realisierung auf die eingangs genannte EP 1 229 985 B1 verwiesen, die hiermit durch ausdrückliche Bezugnahme zum Offenbarungsgehalt der vorliegenden Erfindung hinzugefügt wird.

## Patentansprüche

1. Flüssigkeitsfilter, insbesondere Ölfilter zum Reinigen von Schmieröl, insbesondere für Verbrennungsmotoren von Kraftfahrzeugen,
- mit wenigstens einem Aufnahmeraum (3) zur Aufnahme eines Ringfilterelements (4),
- mit wenigstens einem Deckel (5), der zum Verschließen des Aufnahmeraums (3) an einem Gehäuse (2) befestigbar ist,
- mit einem Einlass (6) für Rohflüssigkeit,
- mit einem Auslass (7) für gereinigte Flüssigkeit,
- mit einem im Einbauzustand unten am Aufnahmeraum (3) angeordneten Leerlauf (8), durch den der Aufnahmeraum (3) beim Entfernen des Deckels (5) entleerbar ist,
- mit einem am Ringfilterelement (4) angeordneten Verschluss (11), der den Leerlauf (8) verschließt, wenn das Ringfilterelement (4) in den Aufnahmeraum (3) eingesetzt und der Aufnahmeraum (3) mit dem Deckel (5) verschlossen ist,
- wobei der den Aufnahmeraum (3) verschließende Deckel (5) im Einbauzustand unten am Gehäuse (2) angeordnet ist,
- wobei der Deckel (5) den Leerlauf (8) enthält,
**dadurch gekennzeichnet,**
- **dass** das Ringfilterelement (4) am Gehäuse (2) axial fixiert ist, derart, dass bei einer axialen Relativbewegung zwischen Deckel (5) und Gehäuse (2) zum Öffnen des Aufnahmeraums (3) der Verschluss (11) den Leerlauf (8) öffnet, vorzugsweise bevor der Deckel (5) vom Gehäuse (2) entfernt ist,
- **dass** das Ringfilterelement (4) mit einer Rastverbindung (21) am Gehäuse (2) zerstörungsfrei lösbar axial fixiert ist, wobei die Rastverbindung (21) so ausgestaltet ist, dass sie Drehbewegungen des Ringfilterelements (4) um eine axiale Drehachse (9) relativ zum Gehäuse (2) ermöglicht,
- **dass** der Leerlauf (8) exzentrisch am Deckel (5) angeordnet ist, wobei der Verschluss (11) exzentrisch am Ringfilterelement (4) angeordnet ist.

2. Flüssigkeitsfilter nach Anspruch 1,
**dadurch gekennzeichnet,**
- **dass** der Verschluss (11) durch einen vom Ringfilterelement (4) axial abstehenden Zapfen (24) gebildet ist,
- **dass** der Leerlauf (8) eine Leerlauföffnung (25) aufweist, in die der Zapfen (24) zum Verschließen des Leerlaufs (8) axial eindringt.

3. Flüssigkeitsfilter nach Anspruch 1,
**dadurch gekennzeichnet,**
- **dass** der Verschluss (11) durch eine axial nach außen offene Kappe (33) gebildet ist,
- **dass** der Leerlauf (8) einen axial in den Aufnahmeraum (3) vorstehenden Stutzen (34) aufweist, der zum Verschließen des Leerlaufs (8) axial in die Kappe (33) eindringt.

4. Flüssigkeitsfilter nach Anspruch 3,
**dadurch gekennzeichnet,**
- **dass** die Kappe (33) topfförmig axial in das Ringfilterelement (4) hineinragt, und/oder
- **dass** die Kappe (33) hülsenförmig axial vom Ringfilterelement (4) absteht.

5. Flüssigkeitsfilter nach einem der Ansprüche 1 bis 4,
**dadurch gekennzeichnet,**
**dass** bei einer exzentrischen Anordnung von Leerlauf (8) und Verschluss (11) eine konzentrisch angeordnete und schraubenförmig ansteigende Rampe (28) vorgesehen ist, die entweder am Deckel (5) so angeordnet ist, dass der Leerlauf (8) zwischen einem unteren Rampenende (29) und einem oberen Rampenende (30) angeordnet ist, oder am Ringfilterelement (4) so angeordnet ist, dass der Verschluss (11) zwischen einem unteren Rampenende (29) und einem oberen Rampenende (30) angeordnet ist.

6. Flüssigkeitsfilter nach Anspruch 5 sowie Anspruch 2 oder 3,
**dadurch gekennzeichnet,**
**dass** die Rampe (28) und der Zapfen (24) oder die Rampe (28) und der Stutzen (34) nach dem Schlüssel-Schloss-Prinzip zusammenwirken, so dass nur ein mit einem an die Rampe (28) adaptierten Zapfen (24) versehenes Ringfilterelement (4) oder nur ein mit einer an den Stutzen (34) adaptierten Rampe (28) versehenes Ringfilterelement (4) so mit dem Flüssigkeitsfilter (1) verwendbar ist, dass der Verschluss (11) beim Aufschrauben des Deckels (5) selbsttätig den Leerlauf (8) findet und verschließt.

7. Flüssigkeitsfilter nach einem der Ansprüche 1 bis 6,
**dadurch gekennzeichnet,**
**dass** der Deckel (5) konzentrisch zur Längsmittelachse (9) des Ringfilterelements (4) einen Dorn (16) aufweist, der im montierten Zustand durch eine zentrale Öffnung (17) der unteren Endscheibe (13) in eine Innenzarge (15) des Ringfilterelements (4) axial hineinragt.

## Claims

1. A fluid filter, in particular an oil filter for cleaning lubricating oil, in particular for internal combustion engines of motor vehicles,
- having at least one receiving space (3) for receiving a ring filter element (4),
- having at least one cover (5) attached to a housing (2) for closing the receiving space (3),
- having an inlet (6) for crude fluid,
- having an outlet (7) for cleaned fluid,
- having a drain(8) arranged at the bottom of the receiving space (3) in the installed state, the receiving space (3) being emptiable through this drain (8) when the cover (5) is removed,
- having a closure (11) arranged on the ring filter element (4), closing the drain (8) when the ring filter element (4) is inserted into the receiving space (3) and the receiving space (3) is closed with the cover (5),
- wherein the cover (5) which closes the receiving space (3) is arranged at the bottom of the housing (2) in the installed state,
- wherein the cover (5) contains the drain (8),
**characterized in that**
- the ring filter element (4) is axially secured on the housing (2) in such a way that when there is a relative axial movement between the cover (5) and the housing (2) to open the receiving space (3), the closure (11) opens the drain (8) preferably before the cover (5) has been removed from the housing (2),
- the ring filter element (4) is axially secured on the housing (2) with a catch connection (21) in such a way that it can be released nondestructively, so that the catch connection (21) may be designed to allow rotational movement of the ring filter element (4) about an axial axis of rotation (9) in relation to the housing (2),
- the drain (8) is arranged eccentrically on the cover (5) such that the closure (11) is arranged eccentrically on the ring filter element (4).

2. The fluid filter according to Claim 1,
**characterized in that**
- the closure (11) is formed by a journal (24) protruding axially away from the ring filter element (4),
- the drain (8) has an outlet opening (25) into which the journal (24) penetrates axially for closing the drain (8).

3. The fluid filter according to Claim 1,
**characterized in that**
- the closure (11) is formed by a cap (33) that is open axially to the outside,
- the drain (8) has a connecting piece (34) protruding axially into the receiving space (3), penetrating axially into the cap (33) for closing the drain (8).

4. The fluid filter according to Claim 3,
**characterized in that**
- the cap (33) protrudes axially into the ring filter element (4) in the form of a pot and/or
- the cap (33) protrudes axially away from the ring filter element (4) in the manner of a sleeve.

5. The fluid filter according to any one of Claims 1 through 4,
**characterized in that**
with an eccentric arrangement of the drain (8) and the closure (11), a ramp (28) ascending helically with a concentric arrangement is provided, said ramp being arranged on the cover (5) in such a way that the drain (8) is arranged between a lower end (29) of the ramp and an upper end (30) of the ramp or is arranged on the ring filter element (4) in such a way that the closure (11) is arranged between a lower end (29) of the ramp and an upper end (30) of the ramp.

6. The fluid filter according to Claim 5 and Claim 2 or 3,
**characterized in that**
the ramp (28) and the journal (24) or the ramp (28) and the connecting piece (34) work together in the manner of the lock-and-key principle, so that only a ring filter element (4) provided with a journal (24) adapted to the ramp (28) or only a ring filter element (4) provided with a ramp (28) adapted to the connecting piece (34) can be used together with the fluid filter (1) in such a way that the closure (11) automatically finds and closes the drain (8) when the cover (5) is screwed on.

7. The fluid filter according to any one of Claims 1 through 6,
**characterized in that**
the cover (5) has a mandrel (16) which is concentric with the central longitudinal axis (9) and, when installed, the mandrel (16) protrudes axially through a central opening (17) of the lower end disk (13) into an inner frame (15) of the ring filter element (4).

## Revendications

1. Filtre à liquide, notamment filtre à huile pour purifier du lubrifiant, notamment pour moteurs à combustion interne de véhicules automobiles,
- comportant au moins un espace de réceptacle (3) pour recevoir un élément de filtre annulaire (4),
- comportant au moins un couvercle (5), qui peut être fixé sur un logement (2) afin d'obturer l'espace de réceptacle (3),
- comportant une admission (6) pour le liquide brut,
- comportant un échappement (7) pour le liquide purifié,
- comportant un passage de vide (8) disposé en l'état monté sur l'espace de réceptacle (3), par l'intermédiaire duquel l'espace de réceptacle (3) peut être vidangé lors du retrait du couvercle (5),
- comportant une obturation (11) disposée sur l'élément de filtre annulaire (4), qui obture le passage à vide (8), quand l'élément de filtre annulaire (4) est inséré dans l'espace de réceptacle (3) et l'espace de réceptacle (3) est obturé avec le couvercle (5),
- dans lequel le couvercle (5) obturant l'espace de réceptacle (3) est disposé en l'état monté au-dessous du logement (2),
- dans lequel le couvercle (5) contient le passage à vide (8),
**caractérisé en ce que**
- l'élément de filtre annulaire (4) est fixé axialement sur le logement (2), de telle sorte que lors d'un mouvement relatif axial entre le couvercle (5) et le logement (2) afin d'ouvrir l'espace de réceptacle (3), l'obturation (11) ouvre le passage de vide (8), de préférence avant que le couvercle (5) soit retiré du logement (2),
- **en ce que** l'élément de filtre annulaire (4) est fixé axialement de manière amovible sans détérioration par une liaison par encliquetage (21) sur le logement (2), dans lequel la liaison par encliquetage (21) est conçue de telle sorte qu'elle permette des mouvements de rotation de l'élément de filtre annulaire (4) autour d'un axe de rotation axial (9) relativement au logement (2),
- **en ce que** le passage de vide (8) est disposé excentriquement sur le couvercle (5), dans lequel l'obturation (11) est disposée excentriquement sur l'élément de filtre annulaire (4).

2. Filtre à liquide selon la revendication 1,
**caractérisé en ce que**
- l'obturation (11) est formée par un tourillon (24) saillant axialement de l'élément de filtre annulaire (4),
- le passage de vide (8) présente une ouverture de passage de vide (25), dans laquelle le tourillon (24) pour obturer le passage de vide (8) pénètre axialement.

3. Filtre à liquide selon la revendication 1,
**caractérisé en ce que**
- l'obturation (11) est formée par un capuchon (33) ouvert axialement vers l'extérieur,
- le passage de vide (8) présente un embout (34) saillant axialement dans l'espace de réceptacle (3), qui pénètre axialement dans le capuchon (33) afin d'obturer le passage de vide (8).

4. Filtre à liquide selon la revendication 3,
**caractérisé en ce que**
- le capuchon (33) en forme de pot saille axialement à l'intérieur de l'élément de filtre annulaire (4), et/ou
- le capuchon (33) en forme de manchon saille axialement de l'élément de filtre annulaire (4).

5. Filtre à liquide selon une des revendications 1 à 4,
**caractérisé en ce que**
lors d'une disposition excentrée du passage de vide (8) et de l'obturation (11), une rampe montante (28) disposée concentriquement et en forme de vis est prévue, qui est disposée soit sur le couvercle (5) de telle sorte que le passage de vide (8) soit disposé entre une extrémité de rampe inférieure (29) et une extrémité de rampe supérieure (30), soit sur l'élément de filtre annulaire (4), de telle sorte que l'obturation (11) soit disposée entre une extrémité de rampe inférieure (29) et une extrémité de rampe supérieure (30).

6. Filtre à liquide selon la revendication 5 ainsi que les revendications 2 ou 3,
**caractérisé en ce que**
la rampe (28) et le tourillon (24) ou la rampe (28) et l'embout (34) coopèrent selon le principe clé/serrure, de telle sorte que seul un élément de filtre annulaire (4) pourvu d'un tourillon (24) adapté à la rampe (28) ou seul un élément de filtre annulaire (4) pourvu d'une rampe (28) adaptée à l'embout (34) puisse être employé avec le filtre de liquide (1), de telle sorte que l'obturation (11) trouve et obture automatiquement le passage de vide (8) lors du vissage du couvercle (5).

7. Filtre à liquide selon une des revendications 1 à 6,
**caractérisé en ce que**
le couvercle (5) présente un ardillon (16) concentriquement à l'axe médian longitudinal (9) de l'élément de filtre annulaire (4), qui en l'état monté saille axialement à travers une ouverture centrale (17) de la rondelle d'extrémité inférieure (13) dans un cadre intérieur (15) de l'élément de filtre annulaire (4).
